# FASCICULE DE BREVET EUROPEEN

(11) **EP 0 434 551 B1**
(45) Date de publication et mention de la délivrance du brevet: **08.02.1995**
(21) Numéro de dépôt: 90403656.3
(22) Date de dépôt: 18.12.1990
(51) Int. Cl.: G07F 7/10

(54) **Procédé de génération d'un nombre aléatoire dans un système de traitement de données, et système mettant en oeuvre un tel procédé**
Verfahren zur Erzeugung einer Pseudozufallszahl in einem Datenbearbeitungssystem und ein System zur Ausführung dieses Verfahrens
Method of generating a pseudo-random number in a dataprocessing-system, and a system for carrying out the method

(30) Priorité: 19.12.1989 FR 8916768
(43) Date de publication de la demande: 26.06.1991
(73) Titulaire: BULL CP8, 78430 Louveciennes (FR)
(72) Inventeur: Hazard, Michel, F-78124 Mareil sur Mauldre (FR)
(74) Mandataire: Colombe, Michel

(56) Documents cités:
- EP-A- 0 096 599
- EP-A- 0 231 702
- EP-A- 0 281 057
- EP-A- 0 281 059
- GB-A- 2 019 060
- COMPUTER NETWORKS & ISDN SYSTEMS, vol. 14, nos. 2-5, 1987, pages 389-395; PH. VAN HEURCK: "TRASEC: National security system for EFTS in Belgium"

## Description

L'invention est relative à un procédé de génération d'un nombre aléatoire dans un système de traitement de données, et à un système mettant en oeuvre un tel procédé.

On connaît, et on utilise, des nombres aléatoires dans les systèmes de traitement de données, en particulier lorsqu'il y a besoin de réaliser un codage ou un chiffrement de données, par exemple avant leur transmission entre deux stations connectées l'une à l'autre. La notion de connexion doit s'entendre au sens large, et s'applique à des stations à distance l'une de l'autre, reliées par au moins une ligne de transmission, ou bien encore à des stations incorporées dans un même boîtier ou très proches l'une de l'autre.

Un procédé de codage ou de chiffrement de données consiste à faire générer par l'une des stations le nombre aléatoire, puis à effectuer une opération de chiffrement des données devant transiter sur la ligne de transmission, à l'aide d'une fonction de chiffrement qui peut être plus ou moins compliquée, cette fonction prenant entre autres comme paramètres d'entrée les données, le nombre aléatoire, et une clé de chiffrement.

Dans un tel cas, une fonction de chiffrement est mémorisée dans chacune des stations, par exemple sous forme d'un algorithme enregistré dans un module de chiffrement, et pour qu'une station recevant un message ou une information chiffrée puisse la déchiffrer, il faut qu'elle incorpore un module de déchiffrement permettant d'effectuer une opération sur le message chiffré qu'elle reçoit, de façon à retrouver le message d'origine.

Bien entendu, il faut que la station dans laquelle le déchiffrement est effectué ait connaissance du nombre aléatoire, et d'une façon générale de l'ensemble des paramètres utilisés pour le chiffrement.

De nombreuses demandes de brevets, au nom de la demanderesse ou de tiers, parmi lesquelles on peut citer la demande de brevet français publiée sous le numéro 2 601 535 au nom de la demanderesse, font mention de systèmes mettant en oeuvre des algorithmes de chiffrement et de déchiffrement de données, et montrent diverses façons d'utiliser des nombres aléatoires, en particulier dans les systèmes à cartes à microcircuits, encore appelées cartes à mémoire et/ou cartes à microcalculateur selon la complexité des circuits qu'elles incorporent.

L'avantage de l'utilisation d'un nombre aléatoire pour chiffrer des données ou des informations est évident: une même donnée chiffrée avec des nombres aléatoires différents produit un résultat de chiffrement différent, de sorte qu'un fraudeur peut difficilement simuler à l'avance le résultat du chiffrement.

Des solutions plus ou moins complexes, selon le degré de sécurité ou les conditions d'accès que l'on veut donner au système peuvent être envisagées.

Dans ces systèmes informatiques, on emploie généralement le terme de nombre aléatoire pour désigner en fait le résultat d'un calcul effectué sur divers paramètres qui peuvent être par exemple contenus dans certaines zones de mémoire.

Il en résulte que, si les paramètres utilisés pour le calcul d'un nombre aléatoire se retrouvent à l'identique lors de deux calculs différents, alors le résultat de ces deux calculs est le même.

Ainsi, un fraudeur compétent qui parviendrait à déterminer quels sont les paramètres utilisés pour générer le nombre aléatoire, et qui serait donc en mesure de déterminer par avance quel sera le prochain nombre aléatoire calculé, pourrait déterminer à l'avance quel serait le résultat du chiffrement appliqué à une donnée déjà chiffrée.

C'est pourquoi, il convient de réduire le plus possible la probabilité qu'un même nombre aléatoire soit utilisé de façon répétitive, pour limiter le plus possible les risques de fraude.

Ainsi, dans les systèmes à carte à microcircuits électroniques, on utilise des nombres aléatoires pour chiffrer des données qui doivent transiter soit localement entre la mémoire ou les microcircuits de la carte et le terminal auquel elle est connectée, ou bien encore entre la carte et une unité centrale de traitement de données, par l'intermédiaire des circuits du terminal. La liste des données ou informations susceptibles d'être chiffrées n'est absolument pas limitative, et on peut envisager de chiffrer n'importe quel type de données, dès lors qu'il faut leur assurer une certaine confidentialité. De même, le chiffrement peut intervenir à n'importe quelle phase de la durée de vie d'une carte, que ce soit lors de sa fabrication et notamment lors de la personnalisation, ou bien lors de son utilisation par un utilisateur final, après que le prestataire de service lui ait remise. Lors de la personnalisation, on peut par exemple chiffrer les données confidentielles qui sont inscrites dans la carte ; lors de l'utilisation, on peut chiffrer des données qui doivent être transmises au terminal, et reconnues par certains circuits de ce dernier, sans qu'une quelconque personne ait besoin d'intervenir.

Dans certains cas ou phases d'exploitation, le nombre aléatoire est généré par la carte à partir de données qui sont contenues dans la mémoire de contrôle de la carte. La mémoire de contrôle est une zone de mémoire dont le contenu est modifié à chaque utilisation de la carte, afin de mémoriser par exemple les tentatives frauduleuses d'utilisation, ou bien les erreurs, ou bien tout autre type d'opérations de contrôle requises par l'utilisation particulière pour laquelle est prévue une carte considérée. C'est par exemple le cas dans la demande de brevet français publié sous le numéro 2 601 535 au nom de la demanderesse. Dans cette demande, on prévoit que le nombre aléatoire est directement prélevé dans la zone de contrôle de la mémoire, et est constitué par le mot de la zone de contrôle qui a été modifié lors de la dernière utilisation. Afin d'économiser de la mémoire, chaque modification de la zone de contrôle affecte en général un nombre de bits inférieur à celui que contient chaque mot de cette zone. Il en résulte que, puisqu'une mémoire est normalement divisée en mots de n bits, chaque mot étant situé à une adresse différente, le contenu d'un mot situé à une adresse donnée est susceptible d'être modifié plusieurs fois, de sorte que le contenu d'un mot situé à une adresse donnée de la mémoire de contrôle peut être utilisé plusieurs fois pour constituer le nombre aléatoire, puisqu'il change à chacune de ces fois.

Cette solution, qui consiste à utiliser des mots de la zone de contrôle, n'est pas totalement satisfaisante, puisque lorsqu'un mot a été entièrement modifié, on utilise un mot situé à une adresse différente, de sorte que par la suite, le contenu du mot d'adresse différente est susceptible de prendre successivement les configurations du mot d'adresse précédente, et on retrouverait les mêmes nombres aléatoires. En conséquence, un fraudeur qui aurait observé la série précédente de nombres aléatoires serait en mesure de déterminer le résultat d'un chiffrement au cas où un nombre aléatoire déjà utilisé serait à nouveau utilisé pour chiffrer la même donnée. C'est pourquoi, on a envisagé d'utiliser non seulement le contenu d'un mot de la zone de contrôle situé à une adresse donnée, mais également un élément prenant en compte la valeur de l'adresse elle-même, de sorte que le nombre aléatoire est constitué par la combinaison de cet élément représentatif de la valeur de l'adresse et le mot lui-même, combinaison devant s'entendre au sens large, c'est-à-dire qu'il peut s'agir du résultat d'un calcul faisant intervenir l'élément représentatif de la valeur de l'adresse et le contenu du mot, ou bien il peut s'agir de toute autre opération logique ou juxtaposition portant sur le mot considéré et son adresse.

La notion d'utilisation, qui conditionne la modification de la zone de contrôle, est également à prendre au sens large, et peut avoir plusieurs significations. Une première signification consiste à considérer qu'une utilisation est constituée par l'ensemble des opérations qui peuvent avoir lieu lors d'une session, c'est-à-dire entre le moment où une carte est insérée dans le connecteur d'un terminal, et le moment où elle est retirée. Ainsi, dans un tel cas, le même nombre aléatoire est utilisé pour chaque opération intermédiaire qui a lieu entre l'insertion et le retrait de la carte. A priori, ceci n'est pas gênant, car lors d'une même session, il est peu probable que le système soit conduit à chiffrer deux fois la même donnée. La seconde signification que l'on peut donner à la notion d'utilisation consiste à considérer que chaque opération intermédiaire réalisée lors d'une session constitue une utilisation. Dans un tel cas, lors d'une même session, plusieurs nombres aléatoires seront générés pour chiffrer les données. La seconde solution présente l'avantage d'une plus grande sécurité, au cas où une même donnée viendrait à être chiffrée au moins deux fois lors d'une même session. Par contre, elle entraîne une plus grande consommation de mémoire, puisqu'à chaque opération, la zone de contrôle est modifiée.

La notion de consommation de mémoire est extrêmement importante, notamment dans les systèmes mettant en oeuvre des objets portatifs tels que des cartes à microcircuits électroniques. Une carte à microcircuits électroniques, on le rappelle, est une carte comportant à l'intérieur de son corps, un ensemble de microcircuits électroniques pouvant être constitués par des mémoires et/ou par des microcalculateurs. Dans un tel type de carte, lors d'une même session, c'est-à-dire entre l'introduction et le retrait de la carte, plusieurs informations contenues en mémoire peuvent être modifiées, ou bien encore de nouvelles informations peuvent être inscrites selon qu'il est important ou non de les mémoriser. Par ailleurs, on rappelle que la mémoire contient habituellement une zone de contrôle qui peut être modifiée à chaque opération élémentaire ou à chaque session. En conséquence, selon la fréquence des utilisations et le nombre d'inscriptions qui sont effectuées, la mémoire de l'objet peut être consommée plus ou moins rapidement. Dans une application bancaire, par exemple, chaque opération de débit ou de crédit peut être mémorisée, de même que chaque erreur d'inscription du code confidentiel. On envisage même des cartes multi-usages qui peuvent avoir plusieurs applications totalement différentes l'une de l'autre; ainsi on envisage d'utiliser une même carte, par exemple pour des applications bancaires, et pour l'obtention de communications téléphoniques dans des cabines d'appel publiques.

Lorsque la mémoire est totalement utilisée, l'objet portatif l'incorporant doit être changé, et il en résulte une augmentation du prix de revient d'un tel système. C'est pourquoi, pour certaines applications, on envisage d'utiliser des mémoires électriquement effaçables et reprogrammables, connues sous le terme EEPROM, correspondant aux initiales des mots anglais désignant ces mémoires. Ceci permet d'augmenter la durée de vie.

Dans un tel, les données confidentielles telles que celles nécessaires à l'identification du porteur de la carte, le numéro de série de la carte, et d'autres données encore, qui sont inscrites lors des phases dites de personnalisation de la carte, seraient stockées dans une zone de mémoire non effaçable, ou bien encore des données nécessaires entre le moment de l'effacement et de futures utilisations après effacement seraient conservées dans une mémoire tampon par exemple.

Dans un tel cas, on envisage que la zone de contrôle puisse être également effacée au moment de l'effacement des autres registres mémoire, puisque le contrôle permet la vérification des opérations d'inscription qui ont eu lieu depuis la mise en service de la carte ou, au cas où un effacement a déjà eu lieu, depuis cet effacement. On conçoit donc que dans un tel cas, chacun des mots de la zone de contrôle peut reprendre une configuration qu'il avait eu lors d'une utilisation précédente avant l'effacement, de sorte qu'un fraudeur compétent pourrait, en ayant observé les opérations précédentes, simuler des opérations de chiffrement qui ont déjà eu lieu et tromper le système, si le nombre aléatoire est obtenu à partir de données de la mémoire de contrôle.

Le procédé de l'invention a pour but de remédier à ces inconvénients, et s'applique à un système de traitement de données utilisant un objet portatif tel qu'une carte à microcircuits électroniques, dans lequel des opérations de chiffrement de données ou d'informations sont réalisées, en utilisant des nombres aléatoires obtenus à partir de paramètres contenus dans la mémoire de l'objet portatif, certaines des zones mémoire de l'objet portatif étant par ailleurs susceptibles d'être réinitialisées ou effacées, de façon à conférer à l'objet portatif une plus grande durée de vie.

L'invention concerne donc un procédé de génération d'un nombre aléatoire (RND) dans un système de traitement de données mettant en oeuvre au moins un objet portatif comprenant des circuits de traitement et au moins une première zone de mémoire, inscriptible et susceptible d'être effacée sur requête des circuits de traitement, ledit procédé consistant à faire prendre en compte au moins un premier paramètre (X) contenu dans la première zone de mémoire et modifié à chaque session d'utilisation de l'objet portatif, et en combinaison avec le premier paramètre (X), au moins un second paramètre (Y) variable (EP-A-231.702).

Selon l'invention ledit second paramètre (Y) est inscrit dans une seconde zone non volatile de l'objet portatif et est modifié par les circuits de traitement de l'objet à chaque effacement de la première zone, de sorte qu'au cas où, suite à un effacement, le premier paramètre (X) retrouve une valeur identique à une valeur qu'il aurait eue entre la première mise en service de l'objet portatif et le dernier effacement, le nombre aléatoire résultant de la combinaison des paramètres est imprévisible.

Ainsi, en raison de la prise en compte d'au moins deux paramètres dont un au moins ne se répète pas, un fraudeur compétent ne peut pas prévoir à l'avance le résultat de la combinaison du premier et du second paramètre, de sorte que l'on doit considérer que le résultat est effectivement un nombre aléatoire aux yeux d'un observateur extérieur.

De préférence, l'algorithme de la fonction de combinaison utilisée entre les deux paramètres est mémorisé dans une zone accessible en lecture seulement par les circuits de l'objet portatif, à l'intérieur de ce dernier, et en cas de besoin, après son calcul le nombre aléatoire est transmis de l'objet portatif vers le terminal, pour que ce dernier puisse utiliser le nombre aléatoire pour, soit effectuer du chiffrement sur des données qu'il est nécessaire de transmettre du terminal vers l'objet portatif sous forme codée, ou bien pour déchiffrer ou vérifier des données transmises sous forme codée de l'objet portatif vers le terminal.

Dans un mode de mise en oeuvre, la première zone, contenant les données susceptibles d'être effacées, est une zone de mémoire électriquement effaçable et programmable (EEPROM), alors que la seconde zone est par exemple une mémoire électriquement programmable (PROM).

L'invention concerne aussi un système pour la mise en oeuvre du procédé précité, comprenant au moins un objet portatif accouplable temporairement à un terminal, l'objet portatif comprenant des circuits de traitement et au moins une première zone de mémoire, inscriptible et susceptible d'être effacée sur requête des circuits de traitement, ledit système étant agencé pour prendre en compte au moins un premier paramètre (X) contenu dans la première zone de mémoire et modifié à chaque session d'utilisation de l'objet portatif, et, en combinaison avec le premier paramètre (X), au moins un second paramètre (Y) variable (EP-A-231.702). Le système selon l'invention est caractérisé en ce que ledit second paramètre (Y) est inscrit dans une seconde zone non volatile de l'objet portatif, et est modifié par les circuits de traitement de l'objet à chaque effacement de la première zone.

D'autres caractéristiques et avantages de la présente invention apparaîtront avec la description ci-après faite en regard des figures annexées, sur lesquelles:
- la figure 1 est un schéma de principe d'un système de traitement de données permettant la mise en oeuvre du procédé selon l'invention ;
- la figure 2 représente la mémoire d'un objet portatif permettant la mise en oeuvre du procédé de l'invention.

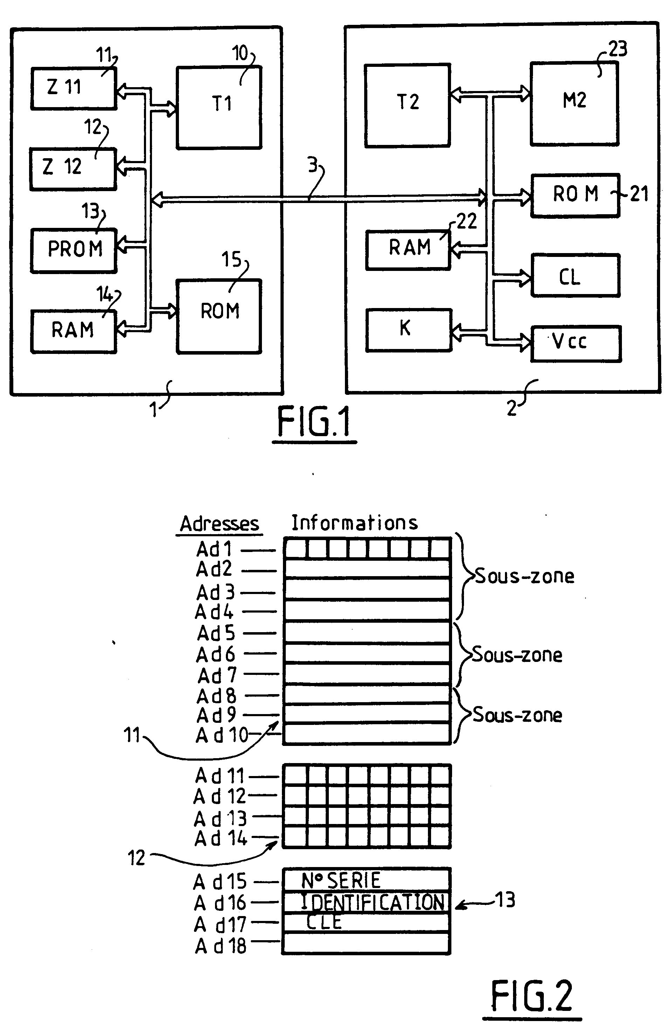

Sur la figure 1, on a représenté le schéma de principe d'un système pour la mise en oeuvre du procédé conforme à l'invention. Le système comporte un objet portatif (1), tel qu'une carte à microcircuits électroniques et au moins un terminal (2) auquel cette carte peut être connectée, par l'intermédiaire de moyens de connexion appropriés, non représentés.

Lorsque l'objet portatif est connecté au terminal, il s'établit de façon connue en soi une liaison électrique par l'intermédiaire d'un bus de liaison (3), réalisé au travers des moyens de connexion. Le bus de liaison (3) peut comporter des moyens pour l'échange des données entre l'objet portatif (1) et le terminal (2), de même que des moyens pour assurer l'alimentation électrique nécessaire au fonctionnement des circuits de l'objet portatif, à partir d'une source d'alimentation Vcc disposée à l'intérieur du terminal (2). Par ailleurs, le terminal (2) peut être interconnecté avec d'autres terminaux ou avec une unité centrale que l'on n'a pas représentée, dans le cas où le système forme un réseau plus complexe.

Un nombre aléatoire, lorsqu'il est utilisé lors d'un chiffrement, permet que des données confidentielles puissent transiter sous forme chiffrée ou codée entre le terminal et l'objet portatif, dans un sens ou dans l'autre. Il faut donc que le terminal (2) ou l'objet portatif (1) soient en mesure l'un et l'autre de chiffrer des données ou informations que l'un doit envoyer en direction de l'autre, quand ceci s'avère nécessaire. C'est pourquoi, l'objet portatif (1) comporte des circuits de traitement (T1) qui permettent au moins de chiffrer les données qu'il est nécessaire de transmettre sous forme codée en direction du terminal (2), et de déchiffrer les données reçues du terminal, et le terminal (2) possède des circuits de traitement (T2) pour chiffrer les données ou informations qu'il faut envoyer sous forme codée en direction de l'objet portatif, et pour déchiffrer les données reçues de l'objet portatif.

Les données qu'il peut être nécessaire de chiffrer sont, par exemple, des codes confidentiels d'habilitation qui doivent transiter de l'un des éléments du système vers l'autre. Ainsi, le terminal comporte par exemple un clavier (K) pour que l'utilisateur puisse entrer par exemple son code d'habilitation personnel. Ce code d'habilitation peut être transmis, pour vérification, aux circuits de traitement (T1) de l'objet portatif, et si l'on veut éviter qu'il soit intercepté lorsqu'il est sur la ligne de transmission (3), il est alors nécessaire de le transmettre sous forme codée. Après transmission, l'information codée reçue par l'objet portatif est décodée puis comparée avec une donnée correspondante contenue dans la mémoire de l'objet portatif, afin d'autoriser la poursuite des transactions.

D'autres procédés peuvent être mis en oeuvre pour vérifier la validité d'un code personnel d'identification entré sur un clavier. Ainsi, au lieu d'effectuer la vérification à l'intérieur de l'objet portatif, on peut l'effectuer à l'intérieur du terminal. Dans ce cas, il faut que les données secrètes d'identification qui sont contenues dans la mémoire de l'objet portatif (1) transitent sur la ligne de transmission (3) sous forme codée, en direction du terminal.

On constate donc que, dans un cas comme dans l'autre, il est nécessaire de chiffrer ces données confidentielles, et dans un tel cas, on préfère utiliser un nombre aléatoire, afin qu'une même donnée confidentielle, transitant plusieurs fois sur la ligne de transmission (3), transite à chaque fois sous une forme différente, pour éviter qu'un fraudeur puisse simuler l'envoi de cette donnée sous sa forme codée.

Conformément à la présente invention, un nombre aléatoire est obtenu à l'aide de paramètres contenus dans la mémoire de l'objet portatif. Il n'est pas nécessaire mais cependant préférable qu'au moins un paramètre servant à l'obtenir soit secret, et en conséquence accessible aux seuls circuits de traitement (T1) de l'objet portatif.

L'objet portatif (1) comporte une première zone (11) de mémoire (Z11) dont les données ou informations qu'elle contient peuvent être effacées, par exemple, lorsque ladite mémoire arrive à saturation. Cette mémoire est par exemple de type EEPROM, et l'effacement se fait sous le contrôle des circuits (10) de traitement (T1) de l'objet portatif. Par ailleurs, cette zone de mémoire (Z11) peut être fractionnée en plusieurs sous-zones élémentaires, dans lesquelles les conditions d'accès en lecture ou en écriture peuvent être régies différemment. Ainsi, certaines zones et/ou sous-zones peuvent être accessibles par l'ensemble du système, alors que d'autres ne peuvent l'être que sous le contrôle des circuits (10) de traitement (T1) de l'objet portatif, que ce soit en lecture ou en écriture. En d'autres termes, certaines sous-zones peuvent être secrètes.

Parmi les sous-zones élémentaires que contient cette zone (Z11), peut se trouver la zone de contrôle dont il a été fait mention précédemment. Cette zone est accessible en lecture et en écriture même de l'extérieur, et contient des informations qui permettent par exemple de reconstituer les différentes phases d'utilisation de la carte. Ainsi, lorsqu'un code d'accès est rentré de façon erronée sur le clavier, la zone de contrôle peut garder trace de cette tentative d'accès erronée. Il en est de même des tentatives fructueuses, ou d'autres évènements marquants dont il est nécessaire de garder trace.

L'objet portatif (1) contient une seconde zone (12) de mémoire (Z12) dont le contenu est modifié à chaque fois que la première zone est effacée. De préférence, cette zone n'est pas effaçable (PROM). C'est la présence de cette zone qui, conformément à la présente invention, permet d'empêcher que le prochain nombre aléatoire qui va être calculé par le système soit déterminable à l'avance. En effet, c'est de cette seconde zone (12) qu'est extrait le second paramètre Y utilisé pour la génération ou le calcul du nombre aléatoire, le premier paramètre X étant extrait de la première zone (11), dont il a été fait mention précédemment. La constitution des paramètres sera expliquée plus en détail ultérieurement.

De la taille de cette seconde zone (12), dépend le nombre d'utilisations possibles de la carte, car lorsque cette zone sera pleine, il ne sera plus possible d'utiliser la carte. C'est pourquoi, lorsque le système détectera que cette seconde zone (12) est pleine, il interdira toute nouvelle utilisation de l'objet portatif.

L'objet portatif peut enfin contenir une troisième (13) zone de type PROM contenant des données qui doivent demeurer pendant toute la durée de vie de la carte. Certaines de ces données sont confidentielles et accessibles en lecture seulement par les circuits de traitement (T1) de l'objet portatif: ce sont par exemple les données qui permettent d'authentifier le porteur de l'objet. D'autres ne sont pas confidentielles, telles que des données qui permettent de vérifier certaines conditions d'utilisation de l'objet.

Des données contenues dans cette troisième zone (13) de mémoire de l'objet portatif (1) peuvent être à lecture autorisée à tous niveaux du système: il s'agit par exemple du numéro de série de l'objet portatif, qui est inscrit lors de sa fabrication. Cette zone peut contenir par ailleurs, sous forme de données, les instructions nécessaires au déroulement des programmes qui seront utilisés par les circuits de traitement (T1) de l'objet portatif, en particulier lors des phases de chiffrement de données.

D'une façon générale, cette troisième zone (13) contient toutes les données qui sont susceptibles d'être réutilisées après chaque effacement de la première zone (11), car nécessaires à l'exploitation du système.

Il est bien entendu que les données nécessaires à l'exploitation du système peuvent différer d'une application à l'autre. En outre, les données susceptibles d'être placées dans la troisième zone et qui ont été énumérées auparavant ne le sont qu'à titre illustratif et non limitatif. Ainsi, dans certaines applications, le numéro de série de l'objet portatif n'apparaît pas.

En parallèle le terminal (2) peut comporter plusieurs zones mémoire (21, 22) de type (ROM, RAM) et d'autres types (23) de mémoire (M2) destinées à mémoriser des données ou informations nécessaires à l'exploitation du système, que ce soit des données qu'il convient de mémoriser de façon définitive ou de façon temporaire, et un circuit de traitement (T2).

A titre illustratif, les données ou informations chiffrées qui sont transmises par l'objet portatif, peuvent être stockées temporairement dans la partie (23) de mémoire du terminal afin d'être traitées, et par ailleurs le terminal peut contenir une zone (21) de mémoire de type ROM qui contient des données ou informations constituant les instructions de fonctionnement des circuits de traitement (T2) du terminal.

Le terminal peut également comporter un circuit d'horloge (CL) qui permet le séquencement des diverses opérations du système; dans ce cas, c'est le circuit d'horloge associé au terminal (2) qui est utilisé pour faire fonctionner les circuits de traitement (T1) de l'objet portatif (1).

Dans une variante non représentée, l'objet portatif (1) comporte son propre circuit d'horloge, qui est alors utilisé lorsque seulement des opérations internes sont requises.

Par ailleurs, l'objet portatif (1) contient par exemple une mémoire (14) à accès aléatoire de type RAM, et volatile, et une mémoire (15) de type ROM, dans laquelle des données nécessaires nécessaires au fonctionnement du système sont inscrites, de façon non volatile, lors de chaque session de l'objet portatif. Ainsi, par exemple, les instructions constituant le programme de fonctionnement de l'objet portatif, qui peuvent être mémorisées de façon permanente dans la zone (15) non volatile, sont chargées au début de chaque session de cette zone inaltérable vers la mémoire (14) à accès aléatoire (RAM). Ceci est connu en soi dans le domaine.

La figure 2 illustre le principe de l'organisation de la mémoire d'un objet portatif permettant la mise en oeuvre du procédé de l'invention.

La mémoire contient trois zones (11, 12, 13) principales, qui peuvent être subdivisées, si besoin, en sous-zones élémentaires.

La première zone (11) est celle qui contient des données ou informations qui sont susceptibles d'être effacées lorsque cette zone est saturée, afin de permettre la réutilisation d'un objet portatif.

Les informations susceptibles de se trouver dans cette zone sont, par exemple, dans le cas d'un objet portatif utilisable pour des applications bancaires, des informations relatives aux débits et aux crédits, et en conséquence des informations relatives au solde de l'objet portatif; ce peut être encore des informations concernant les messages qui ont pu être envoyés au système, ou bien encore reçus du système, et d'une façon générale, toutes informations dont il est important de pouvoir garder trace, au moins de façon momentanée, d'une application sur l'autre, pour éventuellement faire des vérifications ultérieures.

D'une façon générale, cette zone est celle qui contient des données qu'il peut ne pas être nécessaire de conserver pendant toute la durée de vie de la carte, et qui sont inscrites pendant les différentes utilisations. Selon les applications envisagées, différents types de données pourront être inscrites successivement dans cette zone, qui pourra, le cas échéant, être divisée en plusieurs sous-zones élémentaires. Ainsi, cette zone peut contenir une sous-zone d'accès qui mémorise des données relatives aux tentatives d'utilisation de l'objet portatif qui incorpore cette mémoire. Dans cette sous-zone d'accès, à chaque tentative d'accès fructueuse ou non, on inscrit des informations, pour que le système puisse détecter combien de tentatives infructueuses successives ont eu lieu, et le cas échéant, puisse bloquer l'utilisation de l'objet portatif.

Ces moyens mis en oeuvre pour garder trace ne sont pas l'objet de la présente invention, mais ce qui vient d'être décrit montre que la plupart des données qui ont été inscrites, soit depuis la première mise en service de l'objet portatif avant un premier effacement, ou depuis le dernier effacement, peuvent être effacées, en prenant soin de conserver entre deux effacements les informations nécessaires, et qui elles-même par la suite, lors de l'effacement suivant, pourront être effacées.

Un autre type d'informations qu'il peut être nécessaire de conserver lors d'un effacement, et qu'il ne sera pas nécessaire de conserver lors de l'effacement suivant est par exemple le solde de l'objet portatif, lorsqu'il est destiné à des applications bancaires. Le solde est par définition une valeur changeante, qui peut donc être modifiée entre deux effacements successifs, mais qui au moment d'un effacement, doit être conservée, pour être reportée après l'effacement.

La liste n'est pas limitative, et c'est en fonction des applications que le prestataire de services détermine les données qu'il sera nécessaire de réinscrire après un effacement, et qu'il aura donc fallu mémoriser temporairement, par exemple dans une mémoire RAM de l'objet ou dans une autre mémoire tampon du système.

Conformément à la présente invention, la première zone (11) est effaçable, de façon à pouvoir être réinscrite. Dans un mode de réalisation préféré, de façon à ce qu'elle puisse être effacée non accidentellement, cette zone de mémoire, ou les sous zones qu'elle renferme, sont constituées autour d'une structure électriquement effaçable et reprogrammable, c'est-à-dire que cette zone de mémoire est une mémoire du type EEPROM, dont la désignation vient de l'anglosaxon (Electrically Erasable Programmable Read Only Memory), ce qui permet que son effacement s'effectue sous contrôle des circuits de traitement de l'objet portatif.

En effet, ce type de mémoire, pour être effacé, nécessite l'application d'une tension dite tension de programmation, et d'un signal de validation d'effacement. Dans les circuits électroniques de type connu, les tensions d'alimentation et de fonctionnement sont de l'ordre de cinq volts, alors que la tension d'effacement ou de programmation est de l'ordre de vingt volts.

Dans une variante, la première zone est de type EPROM, et peut être effacée par exemple par une exposition aux ultraviolets.

Chaque mot de la mémoire est repérable par son adresse. Dans l'exemple illustré, la première zone (11) contient dix mots de huit bits chacun, ce qui est absolument illustratif et non conforme à la réalité, puisque dans les applications connues de cartes à mémoire, les mots mémoire sont de trente-deux bits, et une zone de transaction peut contenir un nombre de mots beaucoup plus important. La seule limite qui existe est en fait due à la taille de l'objet portatif dans lequel une telle mémoire doit être incorporée.

De façon connue en soi, les adresses peuvent être absolues ou relatives, c'est-à-dire que pour différencier deux adresses successives, soit on tient compte du nombre de bits constituant chaque mot, soit pour passer d'un mot à l'autre on incrémente les adresses d'une unité.

Sur la figure 2, on a illustré 18 mots au total pour les trois zones (11, 12, 13) dont les adresses vont de Ad1 à Ad18.

La seconde zone (12) de mémoire, conformément à la présente invention, est celle qui est modifiée lors de chaque effacement de la première zone (11), afin d'éviter que, suite à un effacement, un fraudeur puisse déterminer par avance le nombre aléatoire qui sera généré en ayant observé les séquences précédentes. La façon dont cette zone est modifiée, et dont elle est utilisée dans la génération du nombre aléatoire, de même que la nature des paramètres qui sont utilisés dans la première zone (11) pour servir de base au calcul du nombre aléatoire, seront expliqués ultérieurement. Cette seconde zone (12) est du type PROM, c'est-à-dire qu'une fois qu'elle a été inscrite, elle ne peut plus être effacée. La modification est irréversible. Cette seconde zone est donc spécifiquement reservée pour le second paramètre.

La troisième zone (13) enfin, est celle qui contient les données confidentielles inscrites pour différencier l'objet portatif qui les contient. Cette zone (13) peut par exemple contenir un numéro de série, des données d'identification du porteur de l'objet portatif, des données indiquant l'usage de l'objet et d'autres données nécessaires aux applications envisagées de l'objet, et qu'il faut conserver entre deux effacements successifs.

Cette zone (13) peut être, comme la seconde, du type programmable et non effaçable par la suite (PROM), et/ou de type à lecture seulement (ROM), les données qu'elle contient y étant inscrites par masquage. Par ailleurs, et de façon connue en soi, certaines des données contenues dans cette zone peuvent être accessibles en lecture par tout ou partie du système, selon le degré de confidentialité que l'on veut bien leur accorder. Dans ce cas, l'accessibilité en lecture par tout ou partie du système peut être déterminée, à l'aide de clés constituées par exemple par les premiers bits de chacun des mots considérés. Selon la configuration de ces bits, les circuits de traitement (T1) de l'objet portatif déterminent quel est le degré d'accessibilité ou de confidentialité du mot considéré.

A ce stade de la description, il convient de noter que dans la première zone (11), certains mots peuvent également être associés à une clé interdisant qu'ils soient accessibles en lecture par certains éléments du système, et la clé est de même nature que celle qui protège les mots de la troisième zone (13). D'une façon générale, ceci peut survenir dans toutes les zones de mémoire, et en particulier, pour conférer une plus grande sécurité au nombre aléatoire, la seconde zone (12) peut être accessible par les seuls circuits de traitement (T1) de l'objet.

Comme écrit précédemment, les seconde et troisième zones peuvent avoir exactement la même structure électronique (PROM), et sont alors disposées sur la même partie du composant, l'unité de traitement (T1) de l'objet portatif déterminant la limite entre les deux zones, à l'aide du calcul des adresses des mots contenus dans chacune de ces zones.

Une même zone peut être partitionnée en plusieurs sous-zones, chaque sous-zone contenant un type donné d'informations.

D'autres définitions sont importantes pour mieux saisir la suite de la description.

D'une part, il sera fait mention du terme "opération". Une opération peut s'entendre comme étant un ordre de débit ou de crédit portant sur un montant donné, dans le cadre d'une application bancaire; ce peut être encore la saisie d'un code confidentiel, ou bien l'envoi d'un message,...

D'autre part, une session est une phase qui est comprise entre le moment où un objet portatif est connecté au terminal, et le moment où il est déconnecté, de sorte que plusieurs opérations peuvent avoir lieu pendant une même session.

Le calcul d'un nombre aléatoire peut s'effectuer de la façon suivante.

Au moins un premier paramètre X est extrait de la première zone effaçable et reprogrammable (11), et est utilisé dans un calcul faisant appel à un second paramètre Y, extrait de la seconde zone (12), dans laquelle au moins une donnée est inscrite à chaque effacement, de sorte que cette zone (12) évolue pendant toute la durée de vie de la carte. Ainsi, au cas où, après un effacement, le premier paramètre X serait identique à un paramètre qui aurait été extrait suite à un effacement précédent, la combinaison du paramètre X avec le nouveau paramètre Y entraîne la génération d'un nombre aléatoire différent.

La combinaison entre les deux paramètres peut être effectuée à l'aide d'une fonction plus ou moins complexe, qui est de préférence mémorisée dans les circuits de l'objet portatif, par exemple dans la zone (15) de mémoire de type (ROM). La fonction peut entraîner une simple concaténation des paramètres X et Y, ou bien une opération logique, telle qu'un ET logique, un OU logique, ou toute autre fonction connue comparable, entre les deux paramètres; elle peut encore entraîner un chiffrement (f) de l'un des paramètres par l'autre, tel que le nombre aléatoire (RND): RND = f (X, Y).

Le premier paramètre X, saisi dans la première zone (11), peut être constitué par l'une ou l'autre des informations qu'elle contient et, de préférence, on choisit une information qui est susceptible de changer à chaque session effectuée avec l'objet portatif.

Ainsi, par exemple, dans le cas d'un objet portatif, tel qu'une carte à microcircuits destinée à des applications bancaires, il existe au moins deux valeurs qui sont susceptibles de changer à chaque session: il s'agit de l'information relative au solde, et de l'information de contrôle, de sorte que l'on peut choisir entre l'une ou l'autre de ces informations.

Bien entendu, ceci n'est pas limitatif, et en fonction de l'application à laquelle est destiné l'objet portatif, on peut envisager d'autres choix.

Dans les différents types d'applications connues jusqu'alors, le traitement s'effectue sur des mots ayant un format donné, exprimé en bits. Ainsi, qu'il a été expliqué, dans l'exemple illustré, on considère que l'on travaille sur des mots de huit bits.

L'inscription d'une information peut affecter la totalité d'un mot. Ainsi, dans le cas d'une application bancaire, une information relative à un solde, ou à un débit, ou à un crédit, se traduit par un message codé sur les n bits constituant un mot, de sorte que lors d'une opération ultérieure de même type, c'est-à-dire une opération ultérieure de débit ou de crédit, l'enregistrement de cette opération ultérieure aura pour conséquence la modification d'un nouveau mot dans la sous-zone représentative du débit, ou d'un nouveau mot dans la sous-zone représentative du crédit, et éventuellement, enfin, l'inscription d'un nouveau mot dans la sous-zone du solde, indiquant le nouveau solde.

En d'autres termes, si lors d'une opération de débit, le montant du débit est inscrit de façon codée sur un mot situé à une adresse Adx dans la sous-zone de débit, une opération ultérieure de débit se traduira par l'inscription du montant de ce nouveau débit dans un mot situé à une adresse différente, par exemple le mot d'adresse absolue ou relative Adx+1 immédiatement supérieure à l'adresse Adx du mot qui avait été précédemment inscrit.

Par contre, d'autres opérations se traduisent par la modification d'un nombre de bits inférieur au nombre total de bits que contient un mot. C'est seulement lorsque tous les bits d'un mot ont été utilisés, que le mot suivant est modifié. C'est par exemple le cas des informations relatives aux tentatives fructueuses ou infructueuses de saisie d'un code confidentiel qui sont codées différemment selon que la tentative est réussie ou pas, et qui sont mémorisées les unes à la suite des autres, dans la mémoire de contrôle.

Par ailleurs, dans ce cas, si on a commencé à modifier un mot, et que la prochaine information que l'on désire écrire nécessite un nombre de bits supérieur au nombre de bits restant disponibles dans le mot, alors on commence à écrire cette information dans le mot entamé, et on inscrit les bits complémentaires dans le mot suivant.

Ces caractéristiques de la gestion de ladite zone de mémoire sont connues de l'art antérieur, et n'entrent pas dans le cadre de la présente invention, mais elles y seront exploitées.

Au vu de ce qui précède, on constate que chaque session peut se traduire par la modification d'au moins un mot dans l'une des sous-zones de la première zone (11), et de préférence, le premier paramètre X est choisi dans une sous-zone dont on sait que son contenu est modifié au moins à chaque session, et dans cette sous-zone, on choisit, pour constituer le paramètre X, le dernier mot modifié précédemment.

Par ailleurs, il peut arriver qu'entre deux effacements successifs, deux mots situés à une adresse différente, dans la sous-zone où on prélève le paramètre X, puissent avoir le même contenu. Dans ce cas, pour éviter que le nombre aléatoire obtenu soit le même, on constitue le paramètre X à partir du dernier mot modifié, et de la valeur représentative de son adresse (Adx) en mémoire. Le paramètre X est donc fonction du mot et de son adresse.

Cette première variante de mise en oeuvre est choisie soit lorsqu'un nombre aléatoire n'est utilisé qu'une seule fois pendant une session, car il est nécessaire de coder seulement une donnée pendant ladite session, ou soit lorsque plusieurs données sont susceptibles d'être codées, mais en utilisant un même nombre aléatoire. Dans ce dernier cas, le nombre aléatoire calculé doit être mémorisé en vue de ses réutilisations pendant la même session.

Il peut arriver que, pour certains types d'applications, aucune donnée ou information ne soit modifiée dans la première zone (11) lors d'une session. Dans un tel cas, si entre la précédente session et la session en cours il n'y a aucun effacement de la première zone, le nombre aléatoire de la session future sera calculé à partir du dernier mot modifié de la première zone, et sera donc le même que celui qui avait été calculé pendant la précédente session. Il en résulte dans cette hypothèse qu'au cas où les circuits de traitement (T1) de l'objet portatif seraient conduits à chiffrer la même donnée que lors de la session précédente (par exemple le code confidentiel), alors le résultat du chiffrement serait le même puisque le nombre aléatoire le serait aussi. Un fraudeur pourrait utiliser cette possibilité pour tromper le système. C'est pourquoi, dans une variante, afin de remédier à cet inconvénient, on prévoit que la première zone (11) comporte une sous-zone spécifique, dont le contenu peut être modifié bit à bit lors de chaque demande de nombre aléatoire, de sorte que, lors d'une demande ultérieure de nombre aléatoire, le nombre aléatoire suivant est calculé au moins à partir d'un paramètre prenant en compte le contenu de cette sous-zone spécifique, tel qu'il a été modifié lors de la précédente demande de nombre aléatoire.

On conçoit bien que cette solution est coûteuse en mémoire, mais elle peut s'imposer dans certains cas.

Dans une variante faisant appel à cette sous-zone spécifique, on envisage que le paramètre X, extrait de la première zone (11) prend en compte non seulement le contenu de cette sous-zone spécifique, mais encore le contenu de la sous-zone de la première zone (11), dont il y a de fortes probabilités qu'il soit modifié lors d'une session. Dans cette variante, afin d'économiser de la mémoire dans la sous-zone spécifique, les circuits de traitement (T1) de l'objet portatif détectent si, lors de la session en cours, le contenu de la sous-zone susceptible d'être modifié lors de la session a effectivement été modifié. Au cas où une modification est survenue dans cette sous-zone, alors le contenu de la sous-zone spécifique n'est pas modifié lors de la session. Par contre, si lors de la session, la sous-zone susceptible de changer de contenu n'a pas été modifiée, alors au moment de la fermeture de la session, les circuits de traitement (T1) de l'objet portatif modifient le contenu de la sous-zone spécifique, de sorte que lors de la session suivante, une demande de nombre aléatoire se traduira par un résultat différent.

Pour la mise en oeuvre de cette variante, il suffit que les circuits de traitement de l'objet portatif vérifient le fait qu'un changement est intervenu ou non dans la sous-zone susceptible d'être modifiée lors de chaque session.

A cet effet, on peut prévoir que lors d'une session, un indicateur de changement d'état de la sous-zone non spécifique est inscrit, par exemple, dans la zone (14) de mémoire volatile de type RAM. La présence de cet indicateur indique en fin de session aux circuits de traitement (T1) de l'objet portatif qu'un changement a eu lieu dans la zone susceptible d'être modifiée, et a contrario, son absence signifie qu'aucun changement n'a eu lieu: dans ce dernier cas, alors, les circuits de traitement (T1) de l'objet portatif ordonnent la modification de la sous-zone spécifique.

Il est possible d'envisager d'autres mesures pour vérifier qu'un changement d'état a eu lieu dans la sous-zone non spécifique, telles que par exemple, la mémorisation, en début de session de l'adresse et/ou du contenu du dernier mot non vierge à l'ouverture de la session, puis en fin de session la recherche de l'adresse et du contenu du dernier mot modifié dans la sous-zone non spécifique. Au cas où l'adresse et le contenu sont identiques, ceci signifie qu'aucun changement n'a eu lieu, et il convient dans ce cas de modifier l'état de la sous-zone spécifique. Au cas où l'adresse ou le contenu ont été modifiés, il n'est pas nécessaire de modifier l'état de la sous-zone spécifique.

Dans une variante, on utilise exclusivement une sous-zone spécifique, pour déterminer le paramètre X, l'état de cette sous-zone spécifique étant modifié à chaque session. Dans ce cas, le paramètre X est déterminé par l'adresse et le contenu du dernier mot modifié dans la sous-zone spécifique. De préférence, dans ce cas, cette sous-zone spécifique est modifiée bit à bit pour réduire la consommation de mémoire.

Cette solution est cependant moins performante et on lui préfère nettement la solution envisagée précédemment qui consiste à prévoir une sous-zone spécifique qui n'est modifiée que lorsqu'une autre sous-zone servant à déterminer le paramètre X n'a pas été modifiée en cours de session.

Que le paramètre X soit fonction du contenu d'un seul mot d'une sous-zone, spécifique ou non, ou bien encore qu'il résulte de la combinaison de plusieurs mots répartis dans une ou plusieurs sous-zones, ce paramètre X est combiné avec le second paramètre Y qui est extrait de la seconde zone (12) modifiée lors de chaque effacement de la première zone (11). De préférence, le paramètre Y est constitué par le dernier mot modifié de cette seconde zone, et par la valeur de l'adresse de ce dernier mot modifié, pour éviter que le paramètre Y puisse avoir deux fois la même valeur. Par ailleurs, de préférence, la modification de cette seconde zone (12) s'effectue bit par bit à chaque effacement, de façon à économiser au maximum la taille mémoire de l'objet portatif, puisque la modification de cette seconde zone s'effectue de façon irréversible. Lorsque cette seconde zone a été totalement modifiée, l'objet portatif devient inutilisable. C'est pourquoi, on choisit une procédure d'inscription dans cette zone qui est la moins consommatrice possible de mémoire.

Comme indiqué auparavant, le second paramètre y est, de préférence, accessible aux seuls circuits de traitement (T1) de l'objet portatif.

La procédure d'effacement de la première zone n'entre pas dans le cadre de la présente invention. Cependant, on peut faire remarquer qu'à priori, elle peut avoir lieu à n'importe quel moment de la session en cours, soit parce que cette première zone (11) est totalement pleine, soit parce que l'une de ses sous-zones est pleine et que le système désire écrire une nouvelle information dans ladite sous-zone.

C'est donc le système, et en particulier les circuits de traitement (T1) de l'objet, qui déterminent à quel moment effectuer l'effacement. Par ailleurs, de préférence, l'inscription d'une nouvelle donnée dans la seconde zone (12) a lieu aussitôt que le système a décidé qu'il faut effacer la première zone, et avant d'effectuer cet effacement.

Bien entendu, au cas où des données contenues dans la première zone seraient nécessaires après son effacement, elles peuvent être mémorisées avant l'effacement, puis réinscrites dans cette zone, après effacement. La mémorisation temporaire peut s'effectuer par exemple dans la zone (14) de mémoire de type RAM volatile de l'objet portatif qui est automatiquement remise dans son état initial, lorsque l'objet portatif est déconnecté du système.

Le genre de données ou d'informations qu'il peut être nécessaire de mémoriser, afin de les réinscrire dans la mémoire effaçable dépend de l'application à laquelle est destiné l'objet portatif. Il peut s'agir, par exemple, dans le cas d'un objet portatif destiné à des applications bancaires, du solde avant effacement, et de la dernière opération effectuée avant l'effacement.

Par ailleurs, dans un mode de mise en oeuvre préféré, le nombre aléatoire est généré en prenant en compte un paramètre supplémentaire spécifique à l'objet portatif considéré. Il peut s'agir, par exemple, du numéro de série de l'objet portatif, ou bien d'une donnée secrète d'identification, propre à l'objet portatif, et inconnue du porteur lui-même. Dans ce dernier cas, il peut s'agir d'une clé diversifiée, c'est-à-dire une clé inscrite dans la mémoire de l'objet portatif, et calculée par mise en oeuvre d'un algorithme de chiffrement prenant en compte le numéro de série de l'objet portatif, et une donnée de personnalisation.

Dans une variante préférée de mise de oeuvre, au cas où il est nécessaire d'utiliser plusieurs fois un nombre aléatoire pendant une même session, on prévoit de changer de nombre aléatoire autant de fois qu'il est nécessaire pendant la session. Ceci évite qu'au cas où la même donnée devrait être chiffrée plusieurs fois pendant la même session, un fraudeur compétent parvienne à tromper le système.

Plusieurs variantes sont envisageables pour permettre que plusieurs nombres aléatoires différents puissent être générés pendant une même session.

Une première variante consiste à créer dans la première zone de mémoire (11) une autre sous-zone spécifique qui est modifiée à chaque demande de nombre aléatoire. Dans un tel cas, le paramètre X peut être déterminé exclusivement à partir du dernier mot modifié dans cette sous-zone spécifique, et de l'adresse dudit mot, sans qu'il soit nécessaire de le combiner avec un autre élément de ladite première zone.

Cette solution présente cependant l'inconvénient d'être consommatrice de mémoire, puisque chaque génération d'un nombre aléatoire s'accompagne de la modification d'au moins un bit dans la sous-zone spécifique, uniquement pour les besoins de la génération du nombre aléatoire.

Bien entendu, le premier paramètre X est combiné avec le second paramètre Y extrait de la seconde zone inscrite lors de chaque effacement, et éventuellement avec un troisième paramètre propre à chaque objet portatif, extrait par exemple de la troisième zone (13). Ce troisième paramètre est secret de préférence.

Une seconde variante est applicable lorsqu'il n'existe pas de sous-zone spécifique dans la première zone (11). Dans ce cas, le premier paramètre X est constitué par une donnée évoluant constamment en cours de session. Dans un mode de mise en oeuvre, la donnée évoluant est constituée par le contenu d'un compteur, prélevé dans la zone de mémoire volatile, et qui traduit, sous forme binaire, un nombre d'évènements qui ce sont déroulés depuis le début de la session en cours. Ce compteur est réinitialisé au début de chaque session.

Un évènement qui peut être comptabilisé est le nombre de demandes de nombres d'aléatoires, et le compteur est incrémenté à chaque demande de nombre aléatoire. Cette solution est particulièrement avantageuse et économique, puisque le contenu du compteur est inscrit dans un seul mot de la mémoire (14) volatile. Par ailleurs, selon le format de travail des circuits de traitement de l'objet portatif, avant que le contenu du compteur repasse à zéro, c'est-à-dire revienne dans l'état qu'il avait lors de l'ouverture de la session, il est possible de comptabiliser un nombre plus ou moins important de demandes de nombres aléatoires.

Ainsi, si le format de travail des circuits de traitement de l'objet portatif est de huit bits, le compteur repassera à la valeur binaire 0 après 255 demandes de nombres aléatoires.

Au cas où le format de travail est de seize bits, ce qui est le format usuel pour les applications dans lesquelles l'objet portatif est une carte à mémoire et microcircuits, le compteur peut comptabiliser 65.535 évènements avant de repasser à la valeur binaire 0.

Il serait bien entendu possible de comptabiliser d'autres évènements, tels que par exemple les impulsions d'horloge du circuit d'horloge (CL) associé au système. Cependant, les horloges associées peuvent avoir des fréquences de quelques mégahertz, et il en résulte que lors d'une même session, le compteur serait conduit à repasser à zéro plusieurs fois, et il serait possible que lors d'une même session, il reprenne une valeur qu'il a eue précédemment, de sorte qu'il serait possible de déterminer à l'avance la valeur du paramètre X.

Cependant, dans une variante perfectionnée, on prévoit qu'en cas de dépassement du compteur, c'est-à-dire lorsqu'il repasse à zéro lors d'une session, alors les circuits de traitement (T1) de l'objet portatif entraînent la modification de l'état de la seconde zone (12) de mémoire qui est inscrite normalement lors de chaque effacement de la première zone. On assimile en effet le repassage du compteur dans son état initial à un effacement de celui-ci.

Il en résulte que si le contenu de la sous-zone non spécifique et le contenu du compteur, lors d'une session sont identiques à un contenu qu'ils ont eu lors de la même session, ou lors d'une autre demande de nombre aléatoire, alors le paramètre X ne sera pas modifié par rapport à ce qu'il était auparavant, mais la modification de l'état de la seconde zone (12) lors du passage à zéro du compteur, entraînera que le paramètre Y sera différent.

Bien entendu, dans la plupart des applications, cette précaution s'avèrera inutile, notamment si le compteur comptabilise les demandes de nombres aléatoires qui sont susceptibles de dépasser rarement un nombre de quelques dizaines lors d'une même session.

Une troisième variante est applicable lorsqu'il n'existe pas de sous-zones non spécifiques dont le contenu est susceptible de changer à chaque session.

Dans ce cas, on crée dans la première zone (11) effaçable, une sous-zone spécifique qui est modifiée à chaque session, de préférence bit par bit, et le paramètre X est établi à partir du dernier mot modifié dans cette sous-zone, et de l'adresse de ce dernier mot modifié, et du contenu d'un compteur fonctionnant d'une façon identique à ce qui vient d'être décrit en regard de la seconde variante.

Une dernière variante enfin est applicable lorsqu'il existe une zone non spécifique ayant de fortes probabilités d'être modifiée lors de chaque session, et une sous-zone spécifique, dont le contenu est modifié en fin de session, au cas où le contenu de la sous-zone non spécifique n'aurait pas été modifié.

Dans ce cas, le paramètre X est fonction du dernier mot modifié dans chacune des sous-zones considérées, de l'adresse respective de ce dernier mot dans chacune des sous-zones, et également du contenu d'un compteur comptabilisant le même type d'éléments que dans les variantes précédentes.

Dans ces deux dernières variantes, au cas où le compteur dépasse sa capacité et reprend une valeur identique à une valeur déjà utilisée lors de la session en cours pour la génération d'un nombre aléatoire, de préférence, on modifie l'état de la sous-zone spécifique pour modifier le paramètre X au cas où l'état de la sous-zone non spécifique n'aurait pas évolué, ce qui évite les mêmes calculs de nombres aléatoires.

Cette solution qui consiste à modifier l'état de la sous-zone spécifique, en cas de dépassement de la capacité du compteur, est préférable à une autre solution que l'on pourrait envisager qui consisterait à modifier l'état de la seconde zone (12) inscrite lors de chaque effacement. En effet, comme il a été expliqué précédemment, cette seconde zone (12) est modifiable de façon irréversible, de sorte que lorsque tous ces éléments élémentaires de mémoire ont été modifiés, l'objet portatif n'est plus utilisable.

Par contre, une modification de la sous-zone spécifique se traduira, lorsque cette sous-zone spécifique aura été totalement modifiée, par un effacement de la première zone (11).

Ainsi, l'invention permet d'une façon simple de résoudre les problèmes envisagés, à savoir que le procédé décrit permet de générer des nombres que l'on peut considérer comme parfaitement aléatoires, puisque l'utilisateur d'un objet portatif mettant en oeuvre le procédé de l'invention, même s'il connaît les paramètres servant à déterminer le nombre aléatoire utilisé lors d'un chiffrement, ne peut pas déterminer à l'avance quelle sera la valeur du nombre aléatoire, notamment lorsque la mémoire contenant des données, dont certaines d'entre elles constituent certains des paramètres utilisés pour la génération du nombre aléatoire, aura été effacée. En effet, le procédé de l'invention permet qu'après l'effacement de ladite zone de mémoire, au moins un autre paramètre pris en compte ne se retrouve pas à l'identique lorsque l'objet portatif est remis en service après ledit effacement, de sorte que lorsque les paramètres de la première zone (11) retrouvent une valeur identique à une valeur qu'ils ont eu avant un effacement précédent, la combinaison des différents paramètres déjà utilisés ne peut pas se reproduire pour un même objet portatif. Il n'est pas possible de prévoir à l'avance le nombre aléatoire qui va résulter des paramètres utilisés.

Par ailleurs, dans un mode de réalisation préféré, on utilise une donnée propre à chaque objet portatif, pour éviter qu'il soit possible de déterminer le nombre aléatoire à partir de résultats établis à l'aide d'un autre objet portatif.

L'invention s'applique à un système pour la mise en oeuvre du procédé dans lequel l'objet portatif est par exemple une carte à mémoire et à microcircuits électroniques, dans laquelle il est nécessaire de chiffrer certaines données avant de les transmettre au reste du système. Les données chiffrables peuvent être des données d'identification, des messages, ou tout autre type de données pour lesquelles une certaine confidentialité est nécessaire lors des transferts.

## Revendications

1. Procédé de génération d'un nombre aléatoire (RND) dans un système de traitement de données mettant en oeuvre au moins un objet portatif (1) comprenant des circuits de traitement (T1) et au moins une première zone de mémoire (11), inscriptible et susceptible d'être effacée sur requête des circuits de traitement (T1), ledit procédé consistant à faire prendre en compte au moins un premier paramètre (X) contenu dans la première zone de mémoire et modifié à chaque session d'utilisation de l'objet portatif, et en combinaison avec le premier paramètre (X), au moins un second paramètre (Y) variable, caractérisé en ce que ledit second paramètre (Y) est inscrit dans une seconde zone (12) non volatile de l'objet portatif et est modifié par les circuits de traitement de l'objet à chaque effacement de la première zone, de sorte qu'au cas où, suite à un effacement, le premier paramètre (X) retrouve une valeur identique à une valeur qu'il aurait eue entre la première mise en service de l'objet portatif et le dernier effacement, le nombre aléatoire résultant de la combinaison des paramètres est imprévisible.

2. Procédé selon la revendication 1, caractérisé en ce que les éléments constitutifs du premier paramètre sont choisis dans la première zone (11) de façon que le premier paramètre (X) ne puisse pas retrouver deux fois la même valeur au cours de deux sessions non séparées par un effacement de cette première zone.

3. Procédé selon l'une des revendications précédentes, caractérisé en ce que la seconde zone (12) est constituée en mots, repérables chacun par une adresse, et contenant chacun un nombre n déterminé de bits, et en ce que le second paramètre (Y) est constitué par le dernier mot modifié de la seconde zone, et par l'adresse de ce dernier.

4. Procédé selon la revendication 3, caractérisé en ce que les n bits d'un mot de la seconde zone (12) sont modifiés l'un après l'autre, au cours de plusieurs effacements successifs, de sorte qu'un mot situé à une adresse donnée prend plusieurs valeurs différentes successives lors de ces effacements successifs.

5. Procédé selon l'une quelconque des revendications 1 à 4, caractérisé en ce que la première zone (11) de mémoire est divisée en sous-zones contenant chacune des informations de nature différente, la modification d'une information dans une sous-zone se traduisant par une modification d'au moins un bit d'un mot de ladite sous-zone, et en ce que le premier paramètre (X) est établi à partir d'au moins une information d'une sous-zone dont le contenu change au moins une fois lors de chaque session, et avec l'adresse en mémoire de cette information.

6. Procédé selon la revendication 5, caractérisé en ce que la première zone (11) de mémoire contient au moins une sous-zone pour mémoriser des informations relatives aux opérations effectuées avec l'objet portatif, et dont le contenu change au moins une fois lors de chaque session, par modification d'au moins un élément mémoire de cette sous-zone, dite sous-zone non spécifique, et en ce que le premier paramètre (X), utilisé pour générer au moins un nombre aléatoire en combinaison avec le second paramètre (Y) lors de la session, est établi à partir, d'une part du dernier mot modifié dans ladite sous-zone non spécifique, et d'autre part à partir de la valeur de l'adresse en mémoire de ce mot.

7. Procédé selon la revendication 5, caractérisé en ce que la première zone (11) de mémoire contient une sous-zone dite sous-zone spécifique qui est modifiée au moins une fois pendant une session, et en ce que le premier paramètre (X) est établi au moins à partir du contenu du dernier mot modifié dans ladite sous-zone spécifique, ainsi que de la valeur de son adresse en mémoire.

8. Procédé selon la revendication 5, caractérisé en ce que la première zone (11) contient une sous-zone non spécifique, dont le contenu a de fortes probabilités de changer au moins une fois lors d'une session, et en ce qu'il consiste à détecter à la fin d'une session si le contenu de ladite sous-zone non spécifique a effectivement été modifié, en ce qu'il consiste à modifier en fin de session l'état d'une sous-zone dite sous-zone spécifique, exclusivement lorsqu'il a été détecté que le contenu de la sous-zone non spécifique n'a pas été modifié lors de la session, et en ce que le premier paramètre (X), établi au début de la session ultérieure, l'est à partir du contenu du dernier mot modifié de chacune de ces deux sous-zones, et de la valeur respective de leur adresse en mémoire, de sorte que la valeur du premier paramètre (X) est imprévisible d'une séssion à l'autre.

9. Procédé selon l'une quelconque des revendications précédentes, caractérisé en ce que, afin de permettre que plusieurs nombres aléatoires différents soient générés lors d'une même session, il consiste à faire prendre en compte pour élaborer le nombre aléatoire, non seulement les premier (X) et second (Y) paramètres, mais également un élément évoluant pendant la session en cours.

10. Procédé selon la revendication 9, caractérisé en ce que l'élément évoluant pendant la session en cours est le contenu d'un compteur d'événements, dont la valeur binaire est inscrite dans une mémoire (14) volatile (RAM) de l'objet portatif (1), de sorte que le contenu du compteur est modifié à chaque survenance de l'événement considéré, et en ce que le contenu du compteur est réinitialisé au début de chaque session.

11. Procédé selon la revendication 10, caractérisé en ce que les événements comptabilisés par le compteur sont le nombre de demandes de nombres aléatoires pendant la session en cours.

12. Procédé selon la revendication 10, caractérisé en ce que les événements comptabilisés par le compteur sont des impulsions d'horloge délivrées par un circuit d'horloge (CL) du système.

13. Procédé selon la revendication 7 et l'une quelconque des revendications 10 à 12, caractérisé en ce que lorsque, lors d'une session, le compteur repasse à sa valeur initiale, le contenu de la sous-zone spécifique est modifié.

14. Procédé selon l'une des revendications 10 à 12 précédentes, caractérisé en ce que, au cas où la première zone (11) de mémoire ne comporte pas de sous-zone spécifique, et au cas où le compteur repasse à sa valeur initiale lors d'une session, le contenu de la seconde zone (12) non volatile est modifié.

15. Procédé selon l'une quelconque des revendications précédentes, caractérisé en ce qu'il consiste à faire prendre en compte, pour la génération du nombre aléatoire, un autre paramètre, représentatif d'une donnée propre à l'objet portatif utilisé, telle qu'une donnée établie à partir du numéro de série de l'objet ou une clé diversifiée, différente d'un objet à un autre.

16. Procédé selon l'une quelconque des revendications 1 à 15 précédentes, caractérisé en ce qu'au moins un des paramètres pris en compte pour le calcul du nombre aléatoire est secret.

17. Système pour la mise en oeuvre du procédé selon l'une quelconque des revendications 1 à 16 comprenant au moins un objet portatif (1) accouplable temporairement à un terminal (2), l'objet portatif (1) comprenant des circuits de traitement (T1) et au moins une première zone de mémoire (11), inscriptible et susceptible d'être effacée sur requête des circuits de traitement (T1), ledit système étant agencé pour prendre en compte au moins un premier paramètre (X) contenu dans la première zone de mémoire et modifié à chaque session d'utilisation de l'objet portatif, et, en combinaison avec le premier paramètre (X), au moins un second paramètre (Y) variable, caractérisé en ce que ledit second paramètre (Y) est inscrit dans une seconde zone (12) non volatile de l'objet portatif, et est modifié par les circuits de traitement de l'objet à chaque effacement de la première zone.

## Patentansprüche

1. Verfahren zum Erzeugen einer Zufallszahl (RND) in einem Datenverarbeibungssystem, das wenigstens einen tragbaren Gegenstand (1) verwendet, der Verarbeitungsschaltungen (T1) und wenigstens eine erste Speicherzone (11) enthält, die beschreibbar ist und auf Anforderung der Verarbeitungsschaltungen (T1) gelöscht werden kann, wobei das Verfahren darin besteht, wenigstens einen ersten Parameter (X), der in der ersten Speicherzone enthalten ist und bei jeder Nutzung des tragbaren Gegenstandes modifiziert wird, sowie in Verbindung mit dem ersten Parameter (X) wenigstens einen zweiten veränderlichen Parameter (Y) zu berücksichtigen, dadurch gekennzeichnet, daß der zweite Parameter (Y) in eine zweite nichtflüchtige Zone (12) des tragbaren Gegenstandes geschrieben und durch die Verarbeitungsschaltungen des Gegenstandes bei jeder Löschung der ersten Zone modifiziert wird, derart, daß in dem Fall, in dem nach einer Löschung der erste Parameter (X) wieder einen Wert annimmt, der mit einem Wert, den er zwischen der ersten Benutzung des tragbaren Gegenstandes und der letzten Löschung hatte, identisch ist, die Zufallszahl, die sich aus der Kombination der Parameter ergibt, unvorhersehbar ist.

2. Verfahren nach Anspruch 1, dadurch gekennzeichnet, daß die den ersten Parameter bildenden Elemente in der ersten Zone (11) in der Weise gewählt werden, daß der erste Parameter (X) im Verlauf zweier nicht durch eine Löschung dieser ersten Zone getrennter Nutzungen nicht zweimal den gleichen Wert annehmen kann.

3. Verfahren nach einem der vorangehenden Ansprüche, dadurch gekennzeichnet, daß die zweite Zone (12) aus Wörtern gebildet ist, die jeweils durch eine Adresse gekennzeichnet werden können und jeweils eine bestimmte Anzahl n von Bits enthalten, und daß der zweite Parameter (Y) durch das letzte modifizierte Wort der zweiten Zone und durch die Adresse dieses letzteren gebildet ist.

4. Verfahren nach Anspruch 3, dadurch gekennzeichnet, daß die n Bits eines Wortes der zweiten Zone (12) im Verlauf mehrerer aufeinanderfolgender Löschungen nacheinander in der Weise modifiziert werden, daß ein an einer gegebenen Adresse befindliches Wort bei diesen aufeinanderfolgenden Löschungen mehrere aufeinanderfolgende verschiedene Werte annimmt.

5. Verfahren nach irgendeinem der Ansprüche 1 bis 4, dadurch gekennzeichnet, daß die erste Zone (11) des Speichers in Unterzonen unterteilt ist, die jeweils Informationen unterschiedlicher Art enthalten, wobei die Modifikation einer Information in einer Unterzone in eine Modifikation wenigstens eines Bits eines Wortes der Unterzone überführt wird, und daß der erste Parameter (X) ausgehend von wenigstens einer Information einer Unterzone, deren Inhalt sich bei jeder Nutzung wenigstens einmal ändert, und mit der Speicheradresse dieser Information erstellt wird.

6. Verfahren nach Anspruch 5, dadurch gekennzeichnet, daß die erste Zone (11) des Speichers wenigstens eine Unterzone enthält, um die Informationen zu speichern, die sich auf die mit dem tragbaren Gegenstand ausgeführten Operationen beziehen, und deren Inhalt sich bei jeder Nutzung wenigstens einmal ändert, indem wenigstens ein Speicherelement dieser sogenannten unspezifischen Unterzone modifiziert wird, und daß der erste Parameter (X), der dazu verwendet wird, bei der Nutzung in Kombination mit dem zweiten Parameter (Y) eine Zufallszahl zu erzeugen, ausgehend einerseits vom letzten modifizierten Wort in der unspezifischen Unterzone und andererseits ausgehend vom Wert der Speicheradresse dieses Wortes erstellt wird.

7. Verfahren nach Anspruch 5, dadurch gekennzeichnet, daß die erste Zone (11) des Speichers eine sogenannte spezifische Unterzone enthält, die während einer Nutzung wenigstens einmal modifiziert wird, und daß der erste Parameter (X) wenigstens ausgehend vom Inhalt des letzten modifizierten Wortes in der spezifischen Unterzone sowie vom Wert seiner Speicheradresse erstellt wird.

8. Verfahren nach Anspruch 5, dadurch gekennzeichnet, daß die erste Zone (11) eine unspezifische Unterzone enthält, deren Inhalt sich bei einer Nutzung mit großer Wahrscheinlichkeit wenigstens einmal ändert, und daß es darin besteht, am Ende einer Nutzung zu ermitteln, ob der Inhalt der unspezifischen Unterzone wirklich modifiziert worden ist, daß es darin besteht, am Ende einer Nutzung den Zustand einer sogenannten spezifischen Unterzone ausschließlich dann zu modifizieren, wenn ermittelt worden ist, daß der Inhalt der unspezifischen Unterzone bei der Nutzung nicht modifiziert worden ist, und daß der erste Parameter (X), der am Beginn der letzten Nutzung erstellt worden ist, ausgehend vom Inhalt des letzten modifizierten Wortes einer jeden dieser beiden Unterzonen und vom entsprechenden Wert ihrer Speicheradresse in der Weise modifiziert wird, daß der Wert des ersten Parameters (X) von einer Nutzung zur nächsten unvorhersehbar ist.

9. Verfahren nach irgendeinem der vorangehenden Ansprüche, dadurch gekennzeichnet, daß es, um zu ermöglichen, daß bei ein und derselben Nutzung mehrere verschiedene Zufallszahlen erzeugt werden, darin besteht, für die Entwicklung der Zufallszahl nicht nur die ersten (X) und zweiten (Y) Parameter, sondern außerdem ein während der laufenden Nutzung sich entwickelndes Element zu berücksichtigen.

10. Verfahren nach Anspruch 9, dadurch gekennzeichnet, daß das während der laufenden Nutzung sich entwickelnde Element der Inhalt eines Ereigniszählers ist, dessen binärer Wert in einen flüchtigen (RAM) Speicher (14) des tragbaren Gegenstandes (1) geschrieben wird, derart, daß der Inhalt des Zählers bei jedem Eintritt des betrachteten Ereignisses modifiziert wird, und daß der Inhalt des Zählers am Beginn einer jeden Nutzung reinitialisiert wird.

11. Verfahren nach Anspruch 10, dadurch gekennzeichnet, daß die durch den Zähler verbuchten Ereignisse die Anzahl der Anforderungen von Zufallszahlen während der laufenden Nutzung sind.

12. Verfahren nach Anspruch 10, dadurch gekennzeichnet, daß die durch den Zähler verbuchten Ereignisse Taktimpulse sind, die von einer Taktgeberschaltung (CL) des Systems ausgegeben werden.

13. Verfahren nach Anspruch 7 und irgendeinem der Ansprüche 10 bis 12, dadurch gekennzeichnet, daß dann, wenn bei einer Nutzung der Zähler wieder zu seinem Anfangswert zurückkehrt, der Inhalt der spezifischen Unterzone modifiziert wird.

14. Verfahren nach einem der vorangehenden Ansprüche 10 bis 12, dadurch gekennzeichnet, daß in dem Fall, in dem die erste Zone (11) des Speichers keine spezifische Unterzone enthält, und in dem Fall, in dem der Zähler bei einer Nutzung zu seinem Anfangswert zurückkehrt, der Inhalt der nichtflüchtigen zweiten Zone (12) modifiziert wird.

15. Verfahren nach irgendeinem der vorangehenden Ansprüche, dadurch gekennzeichnet, daß es darin besteht, für die Erzeugung der Zufallszahl einen weiteren Parameter zu berücksichtigen, der eine den verwendeten tragbaren Gegenstand charakterisierendes Dateneinheit repräsentiert, etwa eine Dateneinheit, die ausgehend von der Seriennummer des Gegenstandes oder einem von einem Gegenstand zum nächsten unterschiedlichen diversifizierten Schlüssel erstellt wird.

16. Verfahren nach irgendeinem der vorangehenden Ansprüche 1 bis 15, dadurch gekennzeichnet, daß wenigstens einer der für die Berechnung der Zufallszahl berücksichtigten Parameter geheim ist.

17. System zum Ausführen des Verfahrens nach irgendeinem der Ansprüche 1 bis 16, mit wenigstens einem tragbaren Gegenstand (1), der vorübergehend an ein Endgerät (2) anschließbar ist, wobei der tragbare Gegenstand (1) Verarbeitungsschaltungen (T1) und wenigstens eine erste Speicherzone (11) enthält, die beschreibbar ist und auf Anforderung der Verarbeitungsschaltungen (T1) gelöscht werden kann, wobei das System so beschaffen ist, daß es wenigstens einen ersten Parameter (X), der in der ersten Speicherzone enthalten ist und bei jeder Nutzung des tragbaren Gegenstandes modifiziert wird, sowie in Kombination mit dem ersten Parameter (X) wenigstens einen zweiten veränderlichen Parameter (Y) berücksichtigt, dadurch gekennzeichnet, daß der zweite Parameter (Y) in eine zweite nichtflüchtige Zone (12) des tragbaren Gegenstands geschrieben wird und bei jeder Löschung der ersten Zone durch die Verarbeitungsschaltungen des Gegenstands modifiziert wird.

## Claims

1. A method of generating a random number (RND) in a data processing system using at least one portable object (1) comprising processing circuits (T1) and at least one first memory zone (11), which can be written to and erased on a request from the processing circuits (T1), said method consisting of causing at least one first parameter (X) contained in the first memory zone and modified with each usage session of the portable object, to be taken into account, and in combination with the first parameter (X), at least one second variable parameter (Y), characterised in that said second parameter (Y) is written in a second non-volatile zone (12) of the portable object and is modified by the processing circuits of the object with each erasure of the first zone, such that in the case where, following an erasure, the first parameter (X) resumes a value which it would have had between the first operation of the portable object and the last erasure, the random number resulting from the combination of the parameters is unforeseeable.

2. A method according to claim 1, characterised in that the elements constituting the first parameter are selected in the first zone (11) such that the first parameter (X) cannot resume the same value twice in the process of two sessions not separated by an erasure of this first zone.

3. A method according to one of the preceding claims, characterised in that the second zone (12) is constituted by words, each locatable by an address, and each containing a given number n of bits, and in that the second parameter (Y) is constituted by the last modified word of the second zone, and by the address of this last word.

4. A method according to claim 3, characterised in that the n bits of a word of the second zone (12) are modified one after the other, in the process of several successive erasures, such that a word situated at a given address takes several different successive values at the time of there successive erasures.

5. A method according to any one of claims 1 to 4, characterised in that the first memory zone (11) is divided into sub-zones each containing information of a different nature, the modification of the information in a sub-zone translating into a modification of at least one bit of a word of said sub-zone, and in that the first parameter (X) is established on the basis of at least one piece of information from one sub-zone the content of which changes at least once at the time of each session, and using the address in memory of this information.

6. A method according to claim 5, characterised in that the first memory zone (11) contains at least one sub-zone for memorising information relating to the operations carried out with the portable object, and the content of which changes at least once at the time of each session, by modification of at least one memory element of this sub-zone, called the non-specific sub-zone, and in that the first parameter (X), used for generating at least one random number in combination with the second parameter (Y) at the time of the session, is established on the basis, on the one hand of the last modified word in said non-specific sub-zone, and on the other hand on the basis of the value of the address in memory of this word.

7. A method according to claim 5, characterised in that the first memory zone (11) contains a sub-zone called the specific sub-zone which is modified at least once during a session, and in that the first parameter (X) is established at least on the basis of the content of the last modified word in said specific sub-zone, as well as the value of its address in memory.

8. A method according to claim 5, characterised in that the first zone (11) contains a non-specific sub-zone, the content of which has a high probability of changing at least once at the time of a session, and in that it consists of detecting at the end of a session, whether the content of said non-specific sub-zone has effectively been modified, in that it consists of modifying at the end of a session the state of one sub-zone called a specific sub-zone, solely when it has been detected that the content of the non-specific sub-zone has not been modified at the time of the session, and in that the first parameter (X), established at the beginning of the final session, is established on the basis of the content of the last modified word of each of these two sub-zones, and of the respective value of their address in memory, such that the value of the first parameter (X) is unforeseeable from one session to another.

9. A method according to any one of the preceding claims, characterised in that, with the aim of permitting several different random numbers to be generated at the time of one session, it consists of causing not only the first (X) and second (Y) parameters, but also an element evolving during the session in process, to be taken into account for developing the random number.

10. A method according to claim 9, characterised in that the element evolving during the session in process is the content of an event counter, the binary value of which is written to a volatile (RAM) memory (14) of the portable object, such that the content of the counter is modified with each occurrence of the event in question, and in that the content of the counter is reinitialised at the beginning of each session.

11. A method according to claim 10, characterised in that the events rendered countable by the counter are the number of demands for random numbers during the session in process.

12. A method according to claim 10, characterised in that the events rendered countable by the counter are clock pulses delivered by a clock circuit (CL) of the system.

13. A method according to claim 7, and any one of claims 10 to 12, characterised in that when, at the time of a session, the counter returns to its initial value, the content of the specific sub-zone is modified.

14. A method according to one of the preceding claims 10 to 12, characterised in that, in the case where the first memory zone (11) does not comprise a specific sub-zone, and in the case where the counter returns to its initial value at the time of a session, the content of the second non-volatile zone (12) is modified.

15. A method according to any one of the preceding claims, characterised in that it consists of causing to be taken into account, for the generation of a random number, another parameter, representing a datum specific to the portable object used, such as a datum established on the basis of the serial number of the object or a diversified key, which differs from one object to another.

16. A method according to any one of the preceding claims 1 to 15, characterised in that at least one of the parameters taken into account for the calculation of the random number is secret.

17. A system for implementing the method according to any one of claims 1 to 16 comprising at least one portable object (1) which can be temporarily coupled to a terminal (2), the portable object (1) comprising processing circuits (T1) and at least one first memory zone (11), which can be written to and erased on a request from the processing circuits (T1), said system being arranged to cause at least one first parameter (X) contained in the first memory zone and modified with each usage session of the portable object to be taken into account and, in combination with the first parameter (X), at least one second variable parameter (Y), characterised in that said second parameter (Y) is written in a second non-volatile zone (12) of the portable object, and is modified by the processing circuits of the object with each erasure of the first zone.
